(19) **Europäisches Patentamt**
**European Patent Office**
**Office européen des brevets**

(11) **EP 2 283 528 B1**

(12) **FASCICULE DE BREVET EUROPEEN**

(45) Date de publication et mention
de la délivrance du brevet:
**10.07.2013 Bulletin 2013/28**

(21) Numéro de dépôt: **09754077.7**

(22) Date de dépôt: **05.05.2009**

(51) Int Cl.:
**H02N 2/18** (2006.01)

(86) Numéro de dépôt international:
**PCT/FR2009/050820**

(87) Numéro de publication internationale:
**WO 2009/144427 (03.12.2009 Gazette 2009/49)**

(54) **RECUPERATION D'ENERGIE A L'AIDE DE POLYMERES ELECTROACTIFS POUR ENGIN DE TRANSPORT**

LEISTUNGSWIEDERHERSTELLUNG MITHILFE ELEKTROAKTIVER POLYMERE FÜR EIN TRANSPORTFAHRZEUG

POWER RECOVERY USING ELECTROACTIVE POLYMERS FOR TRANSPORT VEHICLE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **28.05.2008 FR 0802891**

(43) Date de publication de la demande:
**16.02.2011 Bulletin 2011/07**

(73) Titulaire: **Renault S.A.S.**
**92100 Boulogne-Billancourt (FR)**

(72) Inventeurs:
• **BERNASCONI, Jeremy**
**F-75015 Paris (FR)**
• **BRELAUD, Olivier**
**F-78650 Saulx-Marchais (FR)**

(56) Documents cités:
**EP-A- 0 816 142**   **FR-A- 2 879 509**
**US-A1- 2001 035 723**   **US-A1- 2002 130 673**
**US-A1- 2007 257 490**

## Description

L'invention concerne un dispositif de récupération d'énergie implémenté au sein d'un engin de transport, comme un véhicule automobile par exemple.

Il existe un besoin permanent d'améliorer la gestion de l'énergie consommée par un véhicule automobile. Ainsi, de nombreux systèmes de production d'énergie, dits « alternatifs » car différents des systèmes habituellement utilisés dans le domaine du transport, ont été étudiés.

Par exemple, il a été imaginé de pouvoir récupérer de l'énergie lors du freinage d'un véhicule automobile, ou d'utiliser de l'énergie thermique ou solaire pour produire de l'électricité, ou de récupérer l'énergie mécanique par l'intermédiaire de systèmes piézoélectriques, voire de récupérer de l'énergie à partir d'électricité statique.

Aucune de ces solutions ne s'est avérée exploitable pour des raisons de mauvais rendement énergétique, s'ajoutant à des difficultés d'intégration, de poids et de coût.

Ainsi, l'objet général de l'invention est de proposer une nouvelle solution de production d'énergie dont le rendement énergétique est acceptable, et d'implémentation simple et peu coûteuse.

A cet effet, l'invention propose un dispositif de récupération de l'énergie au sein d'un engin de transport comprenant une caisse et des roues, qui comprend un générateur à base de polymère électroactif implémentée sur l'engin de transport et disposé au niveau de la caisse de sorte de transformer par sa déformation au moins une partie des vibrations mécaniques de la caisse en énergie électrique tel que défini par la revendication 1.

Pour cela, le polymère électroactif peut être équivalent à un condensateur variable, et l'agencement peut comprendre un circuit primaire comprenant un générateur et un interrupteur primaire pour charger le condensateur variable, et un circuit secondaire comprenant un interrupteur secondaire permettant de transmettre un signal généré par le condensateur variable du fait des déformations mécaniques du polymère électroactif entraînant une modification de la capacité électrique du condensateur, et il peut comprendre un moyen de pilotage des interrupteurs.

Le dispositif peut de plus comprendre un dispositif de stockage électrique qui peut consister en un condensateur, ou en variante un super condensateur, ou une batterie rechargeable.

Le dispositif peut comprendre un redresseur et un élément de filtrage et/ou de régulation.

Le polymère électroactif peut se présenter sous la forme d'une membrane diélectrique réalisée à partir d'acrylique, de silicone, de polyfluorure de vinylidène (PVDF) ou de complexe hybride.

Pour cela, la membrane peut comprendre des électrodes comprenant du carbone déposé ou pulvérisé, de fibres de carbone, de nanotubes ou d'oxydes métalliques conducteurs électroniques (oxyde de ruthénium, oxyde d'iridium), ou de polymères conducteurs électroniques (polypyrole, polythiophène, polyaniline).

Selon une implémentation, l'agencement peut être hydropneumatique, comprendre une membrane à base de polymère électroactif insérée entre deux fluides, dont un fluide compressible et un fluide peu compressible dont l'augmentation de la pression qu'il subit entraîne une déformation de la membrane.

La membrane peut être associée au système de suspension de l'engin de transport, le fluide peu compressible étant le fluide du circuit hydraulique du système de suspension, ou la membrane peut être associée aux plots de suspension du moteur.

Le dispositif peut comprendre une membrane à base de polymère électroactif disposée linéairement le long d'un ressort et/ou agencée linéairement et formée d'un réseau de polymères interpénétrés.

Pour cela, la membrane peut être enroulée autour du ressort du système de suspension de l'engin de transport ou autour d'un ressort de suspension de la ligne d'échappement.

Le dispositif peut comprendre une membrane à base de polymère électroactif comprenant une structure plane multicouches.

La membrane peut être disposée au niveau des plots de suspension du système de suspension, en addition ou en remplacement des plots de suspension.

Le dispositif peut comprendre une membrane à base de polymère électroactif sous forme de fibres formant un tissu souple.

La membrane peut être disposée au niveau d'un siège d'un engin de transport, de sorte de pouvoir subir des déformations transmises par les vibrations d'une personne assise sur le siège.

Le dispositif peut comprendre une membrane à base de polymère électroactif de grande surface apte à un positionnement sur un pavillon, un plancher, ou des panneaux latéraux d'un engin de transport.

Le dispositif peut comprendre une membrane à base de polymère électroactif dont la fréquence de résonance mécanique coïncide avec les fréquences d'excitation électrique du dispositif électrique.

L'invention porte aussi sur un siège d'un engin de transport caractérisé en ce qu'il comprend un agencement pour générer de l'énergie tel que décrit précédemment.

Elle porte aussi sur un dispositif de suspension d'un engin de transport caractérisé en ce qu'il comprend un agencement pour générer de l'énergie tel que décrit précédemment.

Un générateur à base de polymère électroactif est connu par US 2001/0036723 A1.

Ces objets, caractéristiques et avantages de la présente invention seront exposés en détail dans la description suivante de modes d'exécution particuliers faits à titre non-limitatif en relation avec les figures jointes parmi lesquelles :

La figure 1 représente un schéma fonctionnel d'un générateur selon le principe de l'invention ;

La figure 2 représente schématiquement le circuit électrique équivalent au générateur selon le principe de l'invention ;

La figure 3 représente schématiquement un agencement au niveau d'un système de suspension selon un mode d'exécution de l'invention ;

La figure 4 représente schématiquement un agencement multicouches d'une membrane selon un autre agencement de l'invention ;

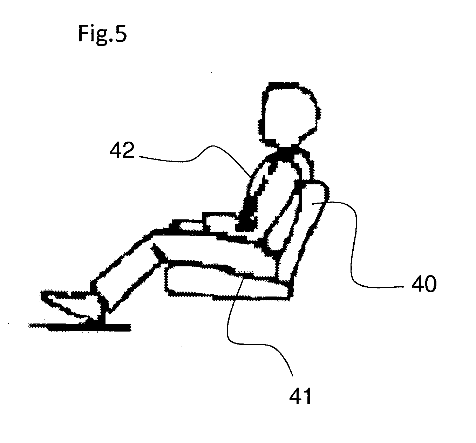

La figure 5 représente schématiquement un agencement au niveau d'un siège selon un mode d'exécution de l'invention.

Selon un élément essentiel de l'invention, un polymère électroactif est utilisé pour récupérer de l'énergie à partir de vibrations de tout ou partie d'un engin de transport.

Les polymères électroactifs possèdent la propriété de transformer de l'énergie électrique en énergie mécanique et réciproquement. Notamment, les polymères diélectriques, qui peuvent être réalisés à partir de matériaux silicone ou acryliques, font partie de la famille des polymères électroactifs et sont particulièrement avantageux pour les configurations selon l'invention. Ils peuvent être utilisés pour former un condensateur en élastomère à capacité variable, sous la forme d'un condensateur plan présentant des électrodes sous forme de plaques parallèles, dont l'écartement varie sous l'effet de vibrations subies lors du déplacement de l'engin de transport sur lequel ils sont disposés. Ces vibrations, provoquées par des forces mécaniques, modifient l'écartement des électrodes initialement chargées, ce qui permet de convertir une partie de l'énergie mécanique des vibrations en énergie électrique. Lorsque l'élastomère est étiré, on applique une charge à basse tension. Lorsque l'énergie mécanique de maintien en extension devient inférieure à l'effort de relaxation et l'effort électrostatique, alors l'élastomère se contracte, ce qui induit l'augmentation de son épaisseur et une diminution de sa surface, ce qui entraîne une baisse de la capacité du condensateur et une élévation de sa tension électrique. Ensuite, l'élastomère retrouve à nouveau sa configuration en extension et le condensateur sa capacité plus forte et sa charge initiale. Ce cycle se répète sous l'effet des vibrations mécaniques.

Ce phénomène peut soit permettre un fonctionnement à charge électrique constante et tension variable pour former un générateur de tension ou à tension constante et charge électrique variable pour former un générateur de courant.

L'énergie théorique obtenue par un tel principe est donnée par la formule :

$$\text{Energie} = 0.5\, Q^2 \left(1/C_f - 1/C_i\right)$$

Où Q représente la charge électrique,
$C_f$ la capacité (en farad) de la membrane relaxée et
$C_i$ la capacité de la membrane étirée

Dans le cas d'un condensateur plan :

La capacité se calcule par $C = \varepsilon_r\,\varepsilon_0\,(S/d)$
Où $\varepsilon_r$ est la constante diélectrique du matériau,
$\varepsilon_0$ est la permittivité du vide,
S la surface du condensateur,
d la distance entre les électrodes (en mètre).

Les polymères diélectriques possèdent selon ce principe une énergie volumique qui peut dépasser 1 J/cm$^3$, soit plus de 1 kJ/kg pour un acrylique, ce qui peut permettre de générer une énergie de quelques dizaines de W/cm$^3$ pour des situations d'oscillations de quelques dizaines de Hertz.

Il apparaît qu'il est avantageux pour une meilleure production d'énergie de charger le condensateur avec une source haute tension et de choisir une configuration permettant une grande variation de sa capacité.

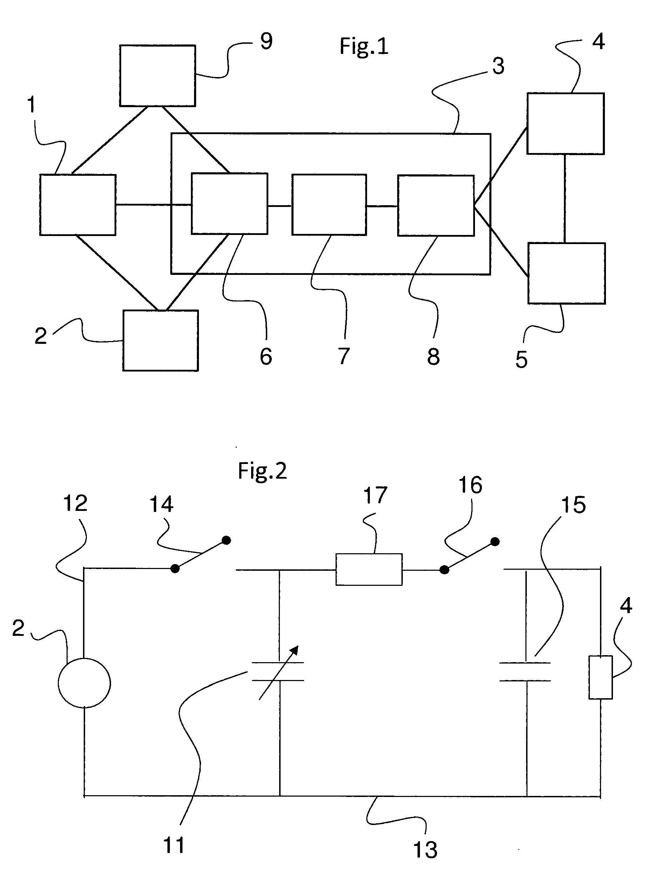

Un schéma électronique, représenté sur les figures 1 et 2, permet d'exploiter l'énergie électrique générée par un polymère électroactif selon le principe expliqué ci-dessus.

La figure 1 représente schématiquement les différentes fonctions qui sont mises en oeuvre en complément d'un générateur à base de polymère électroactif 1, recevant une charge d'un générateur haute tension 2. Un bloc 3 permet d'exploiter cette source électrique et de la transmettre soit directement pour une utilisation immédiate vers un circuit 4 dit « consommateur » soit vers un accumulateur 5 pour une utilisation ultérieure. Le bloc 3 comprend un interrupteur commandé 6, un redresseur 7 et un élément de filtrage et/ou de régulation 8. Enfin, le générateur 1 peut être associé à un capteur de déplacement 9, informant le dispositif de la déformation du polymère et donc de la variation de capacité. Ce capteur peut être externe ou obtenu par une ou plusieur(s) couche(s) de polymères diélectriques intégrée(s) au récupérateur d'énergie et remplissant aussi la fonction de capteur.

La figure 2 représente le schéma électrique correspondant, qui comprend un circuit primaire 12 et un circuit secondaire 13. Le générateur 2 permet de charger les électrodes du polymère électroactif 1, qui est équivalent à un condensateur variable 11, au moment où il possède sa capacité maximum. Dans cette phase de chargement, l'interrupteur primaire 14 du circuit primaire 12 est fermé alors que l'interrupteur secondaire 16 du circuit secondaire 13 est ouvert. Lorsque cette phase est terminée, l'interrupteur primaire 14 est alors ouvert et le condensateur 11 reste chargé. Lors des déformations mécaniques du polymère électroactif, la capacité électrique du condensateur 11 diminue et sa tension électrique augmente. Le signal généré permet soit une utilisation par un consommateur 4 soit un stockage dans un accumulateur 5, représenté par un condensateur 15, après remise en forme par un circuit de redressement et de régulation 17. Les interrupteurs 14, 16 du dispositif sont pilotés en fonction du signal d'excitation pour la gestion optimale du chargement/déchargement du condensateur 11, par exemple par un microprocesseur mettant en oeuvre des lois de commande.

Dans ce schéma électrique, le dispositif de stockage électrique 5 est optionnel puisque l'électricité produite peut être directement consommée par des dispositifs comme des capteurs optiques, de pression, de température, ou des systèmes d'éclairage (LED). Le stockage électrique présente l'avantage d'offrir plus de possibilités, et de notamment permettre à l'électricité d'être utilisée quand le dispositif ne reçoit pas suffisamment d'excitation mécanique ou pour pouvoir disposer d'une plus grande puissance. Ainsi, ce dispositif de stockage électrique 5 peut consister en un condensateur 15, ou en variante un super condensateur, une batterie rechargeable...

Selon l'invention, le dispositif précédent est implémenté sur un engin de transport qui peut être considéré de manière simplifiée comme comprenant une caisse montée sur des roues, la caisse subissant des vibrations transmises par les roues à travers en général un dispositif de suspension. Le concept de l'invention consiste à générer de l'énergie électrique par un polymère électroactif à partir des vibrations mécaniques subies par la caisse de l'engin de transport, qui peut être tout véhicule automobile, comme une voiture, un camion, un bus, un tracteur, un cycle motorisé... ou un train, un cycle non motorisé...

Lorsque l'excitation est connue et périodique, comme les vibrations du moteur, l'efficacité du système de récupération d'énergie est augmentée.

Pour ce type d'implémentation, une membrane diélectrique d'un polymère électroactif peut être réalisée à partir d'acrylique, de silicone, de polyfluorure de vinylidène (PVDF) ou de complexe hybride. De manière plus détaillée, les matériaux suivants du marché peuvent convenir : acylique 3M VHB 4910, Hylomar, NuSil CF19-2186 silicone, Dow Corning HSIII silicone, Dow Corning Sylgard 186, Dow Corning fluorosilicone 730, silicone Deerfield polyuréthane PT6100S ou un caoutchouc naturel.

Les électrodes peuvent être constituées de carbone déposé ou pulvérisé, de fibres de carbone, de nanotubes ou d'oxydes métalliques conducteurs électroniques (oxyde de ruthénium, oxyde d'iridium), ou de polymères conducteurs électroniques (polypyrole, polythiophène, polyaniline). Tout conducteur électrique apte à suivre la déformation du polymère électroactif lors de son utilisation peut convenir.

La récupération d'énergie électrique selon le principe explicité ci-dessus peut être réalisée par différents agencements dont certains modes d'exécution vont maintenant être décrits à titre d'exemples.

D'abord, l'énergie peut être obtenue en disposant un polymère électroactif sous la forme d'une membrane diélectrique disposée entre deux fluides selon un agencement hydropneumatique. Cette membrane peut se présenter sous la forme d'une couche d'acrylique associée à une graisse graphite ou argent pour former les électrodes.

Selon une variante d'exécution, il est possible d'alterner plusieurs couches ainsi formées, représentant plusieurs condensateurs en parallèle pour augmenter la capacité totale et la quantité d'énergie récupérée.

Selon une autre variante de réalisation, une prétension de la membrane diélectrique peut être réalisée afin d'augmenter ses performances.

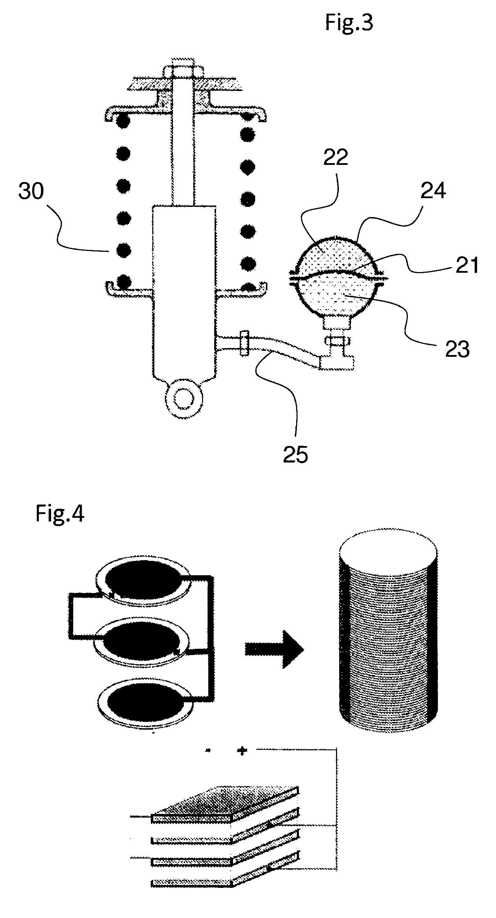

La figure 3 représente plus précisément l'agencement hydropneumatique sur la base d'une telle membrane 21 insérée entre deux fluides 22, 23 dans une sphère accumulatrice 24. Le fluide 22 de la partie supérieure peut être un gaz neutre fortement compressible, comme de l'air ou de l'azote. Le fluide 23 de la partie inférieure est peu compressible et peut être une huile. L'augmentation de la pression subie par ce fluide inférieur 23 se répercute donc par une déformation de la membrane 21 vers le volume supérieur, en comprimant le fluide supérieur 22.

En associant l'agencement précédent, directement ou indirectement, à un dispositif amortisseur 30 d'un engin de transport, il est possible de transférer les vibrations mécaniques de l'amortisseur en vibration à la membrane diélectrique, par l'intermédiaire des deux fluides 22, 23 et d'un tuyau 25. Sur une telle implémentation sur un système de suspension hydropneumatique sur train roulant, le circuit hydraulique existant dans la suspension est utilisée pour le fluide inférieur 23. Lorsque le système de suspension n'est pas utilisé, la pression des fluides 22, 23 se compense et la membrane 21 est dans sa position initiale. Sous l'effet de l'excitation de la route, l'amortisseur est comprimé, ce qui augmente la pression du fluide inférieur 23 et une déformation de la membrane. En remarque, ce principe est aussi adapté à une suspension à ressorts pneumatiques.

En variante, cet agencement peut être associé au circuit hydraulique des plots de suspension du moteur.

Selon un autre agencement linéaire, une membrane peut être enroulée autour d'un ressort. En variante, il est possible d'utiliser un réseau de polymères interpénétrés auquel cas la pré-élongation obtenue par le ressort n'est plus nécessaire. En variante, il est aussi possible de prévoir une pré-élongation sans ressort en prévoyant un pré-étirement de la membrane correspondant à son débattement maximal avant de fixer ses extrémités dans cette position. Dans un tel agencement dit à « rouleau », l'épaisseur des couches tend à diminuer et la surface active à augmenter quand un effort de traction est exercé à chaque extrémité de la membrane. La capacité du condensateur correspondant augmente donc avec l'élongation.

Cet agencement peut être implémenté autour ou à l'intérieur du ressort de suspension, de manière uniformément répartie, parallèlement à l'axe de débattement de l'amortisseur et raccordé à leurs extrémités haute et basse respectivement sur la coupelle supérieure et sur la coupelle inférieure de la jambe de force, de manière à ce que leur prédéformation corresponde au débattement maximum de la suspension. Cette solution permet une augmentation de la capacité avec la détente de la suspension et une diminution de la capacité avec sa compression, à partir de la position d'équilibre centrale de la suspension.

Selon un autre agencement, des membranes diélectriques sans précontrainte, à base de réseaux de polymères interpénétrés, peuvent être utilisées sans association obligatoire avec un cadre mécanique comme avec un bâti ou avec un système de prédéformation comme un ressort. La membrane peut se composer de plusieurs couches planes superposées, dont les électrodes sont reliées alternativement deux par deux. Dans un tel agencement illustré par la figure 4, la capacité augmente lors de la compression.

Un tel agencement peut être utilisé en remplacement ou en complément des plots de suspension moteur.

Un tel agencement peut aussi être implémenté au niveau d'un siège 40 d'un véhicule, en intercalant une membrane 41 entre une personne 42 et le siège 40, par exemple sous la coiffe ou entre la mousse et la nappe ou entre l'armature et l'embase du siège. Cet agencement permet de générer de l'énergie à partir des excitations mécaniques transmises par la personne 42 assise sur le siège 40 suite aux vibrations transmises par la route. Selon une variante d'exécution de cet agencement, une telle membrane peut remplir en outre une seconde fonction de capteur de présence d'un passager sur le siège.

Selon un autre agencement possible, des polymères électroactifs sous forme de fibres peuvent former des tissus souples, ce qui peut permettre de réaliser des systèmes souples. Il est possible d'obtenir une variation de capacité de chacune des fibres, par élongation du tissu par son allongement global. Cet agencement peut aussi être implémenté au niveau d'un siège de manière similaire au mode d'exécution explicité ci-dessus.

Les agencements précédents ont été décrits comme pouvant être associés à un système de suspension ou à un siège d'un engin de transport. Toutefois, ils sont implémentables selon de nombreuses possibilités sur un engin de transport. Par exemple, un agencement de type linéaire ou rouleau ou en structure plane multicouches peut être combiné avec des ressorts servant de suspension d'une ligne d'échappement d'un véhicule à moteur à combustion interne. Eventuellement, un tel agencement pourra bénéficier d'une protection thermique. De plus, de grandes surfaces de polymères électroactifs peuvent permettre d'atteindre des variations de capacité électrique importante même dans des situations de faible déformation. Ainsi, des implémentations intéressantes sont possibles en positionnant par exemple une membrane plane sur un pavillon, un plancher, ou des panneaux latéraux d'un engin de transport.

Les paramètres du dispositif de génération électrique seront avantageusement déterminés dans chaque implémentation de sorte d'avoir une fréquence de résonance mécanique en coïncidence avec les fréquences d'excitation électrique du dispositif électrique. Pour cela, un système électronique de type circuit oscillant RLC peut être utilisé pour accorder la fréquence de résonance électrique à la fréquence d'excitation mécanique.

De plus, la solution selon l'invention permet non seulement de transformer l'énergie mécanique en énergie électrique mais aussi au moins implicitement à diminuer l'énergie mécanique parasite et inutile. Ainsi, un autre mode d'exécution peut consister à exploiter ce second effet des polymères électroactifs en réalisant un amortissement piloté et contrôlé, en addition ou en remplacement du premier effet de génération d'énergie. Dans ce mode, ils peuvent servir d'amortissant pour les traitements acoustiques.

Plusieurs dispositifs complémentaires, parmi ceux décrits précédemment ou d'autres variantes non décrites du concept de l'invention, peuvent être associés sur le même engin de transport, par exemple sur le train avant et le train arrière, selon une fréquence propre différente adaptée à la fréquence de résonance de respectivement le train avant et le train arrière. De plus, la solution de génération d'énergie selon l'invention peut être combinée avec tout autre dispositif de production d'énergie.

Ainsi, la solution décrite atteint bien les objets recherchés et présente les avantages suivants :

- elle est peu coûteuse car les polymères sont peu coûteux, et facile à implémenter car leur géométrie peut s'adapter à tout type de surface ;
- elle entraîne un faible surpoids car les matériaux utilisés sont légers ;
- elle permet d'atteindre une puissance suffisante pour son application avantageuse sur un engin de transport.

**Revendications**

1. Dispositif de récupération de l'énergie au sein d'un engin de transport comprenant une caisse et des roues, **caractérisé en ce qu'**il comprend un générateur à base de polymère électroactif (1) sous la forme d'une membrane diélectrique implémentée sur ledit engin de transport et disposée au niveau de la caisse de sorte de transformer par sa déformation au moins une partie des vibrations mécaniques de la caisse en énergie électrique, ledit générateur permettant de charger un dispositif de stockage électrique (5) alimentant un consommateur d'énergie dudit engin de transport.

2. Dispositif de récupération de l'énergie au sein d'un engin de transport selon la revendication 1, **caractérisé en ce que** le polymère électroactif (1) est équivalent à un condensateur variable (11), et **en ce que** l'agencement comprend un circuit primaire (12) comprenant un générateur (2) et un interrupteur primaire (14) pour charger le condensateur variable (11), et un circuit secondaire (13) comprenant un interrupteur secondaire (16) permettant de transmettre un signal généré par le condensateur variable (11) du fait des déformations mécaniques du polymère électroactif (1) entraînant une modification de la capacité électrique du condensateur (11), et **en ce qu'**il comprend un moyen de pilotage des interrupteurs (14, 16).

3. Dispositif de récupération de l'énergie au sein d'un engin de transport selon la revendication 1 ou 2, **caractérisé en ce que** le dispositif de stockage électrique (5) consiste en un condensateur (15), ou en un super condensateur, ou en une batterie rechargeable.

4. Dispositif de récupération de l'énergie au sein d'un engin de transport selon l'une des revendications précédentes, **caractérisé en ce qu'**il comprend un redresseur (7) et un élément de filtrage et/ou de régulation (8).

5. Dispositif de récupération de l'énergie au sein d'un engin de transport selon l'une des revendications précédentes, **caractérisé en ce que** le polymère électroactif (1) se présente sous la forme d'une membrane diélectrique réalisée à partir d'acrylique, de silicone, de polyfluorure de vinylidène (PVDF) ou de complexe hybride.

6. Dispositif de récupération de l'énergie au sein d'un engin de transport selon la revendication précédente, **caractérisé en ce que** la membrane comprend des électrodes comprenant du carbone déposé ou pulvérisé, de fibres de carbone, de nanotubes ou d'oxydes métalliques conducteurs électroniques (oxyde de ruthénium, oxyde d'iridium), ou de polymères conducteurs électroniques (polypyrole, polythiophène, polyaniline).

7. Dispositif de récupération de l'énergie au sein d'un engin de transport selon l'une des revendications précédentes, **caractérisé en ce que** l'agencement est hydropneumatique, comprend une membrane (21) à base de polymère électroactif insérée entre deux fluides (22, 23), dont un fluide (22) compressible et un fluide (23) peu compressible dont l'augmentation de la pression qu'il subit entraîne une déformation de la membrane (21).

8. Dispositif de récupération de l'énergie au sein d'un engin de transport selon la revendication précédente, **caractérisé en ce que** la membrane est associée au système de suspension de l'engin de transport, le fluide peu compressible étant le fluide du circuit hydraulique du système de suspension, ou **en ce que** la membrane est associée aux plots de suspension du moteur.

9. Dispositif de récupération de l'énergie au sein d'un engin de transport selon l'une des revendications 1 à 6, **caractérisé en ce qu'**il comprend une membrane à base de polymère électroactif disposée linéairement le long d'un ressort et/ou agencée linéairement et formée d'un réseau de polymères interpénétrés.

10. Dispositif de récupération de l'énergie au sein d'un engin de transport selon la revendication précédente, **caractérisé en ce que** la membrane est enroulée autour du ressort du système de suspension (30) de l'engin de transport ou autour d'un ressort de suspension de la ligne d'échappement.

11. Dispositif de récupération de l'énergie au sein d'un engin de transport selon l'une des revendications 1 à 6, **caractérisé en ce qu'**il comprend une membrane à base de polymère électroactif comprenant une structure plane multicouches.

12. Dispositif de récupération de l'énergie au sein d'un engin de transport selon la revendication 9 ou 11, **caractérisé en ce que** la membrane est disposée au niveau des plots de suspension du système de suspension de l'engin de transport, en addition ou en remplacement des plots de suspension.

13. Dispositif de récupération de l'énergie au sein d'un engin de transport selon l'une des revendications 1 à 6, **caractérisé en ce qu'**il comprend une membrane à base de polymère électroactif sous forme de fibres formant un tissu souple.

14. Dispositif de récupération de l'énergie au sein d'un engin de transport selon la revendication 11 ou 13, **caractérisé en ce que** la membrane (41) est disposée au niveau d'un siège (40) d'un engin de transport, de sorte de pouvoir subir des déformations transmises par les vibrations d'une personne (42) assise sur le siège (40).

15. Dispositif de récupération de l'énergie au sein d'un engin de transport selon l'une des revendications 1 à 6, **caractérisé en ce qu'**il comprend une membrane à base de polymère électroactif de grande surface relativement à celles d'un pavillon, ou d'un plancher, ou aux panneaux latéraux dudit engin de transport, ladite membrane étant apte à un positionnement sur l'une desdites surfaces.

16. Dispositif de récupération de l'énergie au sein d'un engin de transport selon l'une des revendications 2 à 15, **caractérisé en ce qu'**il comprend une membrane à base de polymère électroactif dont la fréquence de résonance mécanique coïncide avec les fréquences d'excitation électrique du dispositif électrique.

17. Siège (40) d'un engin de transport **caractérisé en ce qu'**il comprend un dispositif de récupération de l'énergie selon la revendication 14.

18. Dispositif de suspension (30) d'un engin de transport **caractérisé en ce qu'**il comprend un dispositif de récupération de l'énergie selon la revendication 10 ou 12.

**Patentansprüche**

1. Vorrichtung zur Energierückgewinnung in einem Transportmittel, das eine Karosserie und Räder umfasst, **dadurch gekennzeichnet, dass** die Vorrichtung einen Generator auf Basis eines elektroaktiven Polymers (1) in der Form einer dielektrischen Membran umfasst, die in dem Transportmittel umgesetzt und auf Höhe der Karosserie angeordnet ist, so dass durch seine Verformung mindestens ein Teil der mechanischen Schwingungen der Karosserie in elektrische Energie umgewandelt wird, wobei der Generator das Laden einer Stromspeichervorrichtung (5) ermöglicht, die einen Energieverbraucher des Transportmittels speist.

2. Vorrichtung zur Energierückgewinnung in einem Transportmittel nach Anspruch 1, **dadurch gekennzeichnet, dass** das elektroaktive Polymer (1) einem variablen Kondensator (11) entspricht und dass die Anordnung einen primären Schaltkreis (12), der einen Generator (2) und einen primären Unterbrecher (14) zum Laden des variablen Kondensators (11) umfasst, und einen sekundären Schaltkreis (13) umfasst, der einen sekundären Unterbrecher (16) umfasst, der das Übertragen eines von dem variablen Kondensator (11) erzeugten Signals aufgrund von mechanischen Verformungen des elektroaktiven Polymers (1) ermöglicht, was eine Veränderung der elektrischen Kapazität des Kondensators (11) mit sich bringt, und dass die Vorrichtung ein Mittel zur Steuerung der Unterbrecher (14, 16) umfasst.

3. Vorrichtung zur Energierückgewinnung in einem Transportmittel nach Anspruch 1 oder 2, **dadurch gekennzeichnet, dass** die Stromspeichervorrichtung (5) aus einem Kondensator (15) oder einem Superkondensator oder einer aufladbaren Batterie besteht.

4. Vorrichtung zur Energierückgewinnung in einem Transportmittel nach einem der vorhergehenden Ansprüche, **dadurch gekennzeichnet, dass** sie einen Gleichrichter (7) und ein Filter- und/oder Regelungselement (8) umfasst.

5. Vorrichtung zur Energierückgewinnung in einem Transportmittel nach einem der vorhergehenden Ansprüche, **dadurch gekennzeichnet, dass** das elektroaktive Polymer (1), das die Form einer dielektrischen Membran aufweist, aus Acryl, Silikon, Polyvinylidenfluorid (PVDF) oder einem Hybridkomplex hergestellt ist.

6. Vorrichtung zur Energierückgewinnung in einem Transportmittel nach dem vorhergehenden Anspruch, **dadurch gekennzeichnet, dass** die Membran Elektroden umfasst, die abgeschiedenen oder pulverisierten Kohlenstoff, Kohlenstofffasern, Nanoröhrchen oder Oxide elektrisch leitfähiger Metalle (Rutheniumoxid, Iridiumoxid) oder elektrisch leitfähige Polymere (Polypyrrol, Polythiophen, Polyanilin) umfassen.

7. Vorrichtung zur Energierückgewinnung in einem Transportmittel nach einem der vorhergehenden Ansprüche, **dadurch gekennzeichnet, dass** die Anordnung hydropneumatisch ist und eine Membran (21) auf Basis eines elektroaktiven Polymers umfasst, die zwischen zwei Flüssigkeiten (22, 23) eingeschoben ist, von denen unter Erhöhung des Drucks eine Flüssigkeit (22) kompressibel ist und eine Flüssigkeit (23) gering kompressibel ist, wobei die Druckerhöhung plötzlich eine Verformung der Membran (21) mit sich bringt.

8. Vorrichtung zur Energierückgewinnung in einem Transportmittel nach dem vorhergehenden Anspruch, **dadurch gekennzeichnet, dass** die Membran mit dem Aufhängungssystem des Transportmittels in Verbindung steht, wobei die gering kompressible Flüssigkeit die Flüssigkeit des Hydraulikkreislaufs des Aufhängungssystems ist, oder dass die Membran mit Kontakten der Motoraufhängung in Verbindung steht.

9. Vorrichtung zur Energierückgewinnung in einem Transportmittel nach einem der Ansprüche 1 bis 6, **dadurch gekennzeichnet, dass** sie eine Membran auf Basis eines elektroaktiven Polymers umfasst, die linear entlang einer Feder angeordnet ist und/oder linear eingerichtet ist und ein Netz von sich gegenseitig durchdringenden Polymeren bildet.

10. Vorrichtung zur Energierückgewinnung in einem Transportmittel nach dem vorhergehenden Anspruch, **dadurch gekennzeichnet, dass** die Membran um die Feder des Aufhängungssystems (30) des Transportmittels oder um eine Aufhängungsfeder der Abgasleitung gewickelt ist.

11. Vorrichtung zur Energierückgewinnung in einem Transportmittel nach einem der Ansprüche 1 bis 6, **dadurch gekennzeichnet, dass** sie eine Membran auf Basis eines elektroaktiven Polymers umfasst, die eine ebene Mehrschichtstruktur umfasst.

12. Vorrichtung zur Energierückgewinnung in einem Transportmittel nach Anspruch 9 oder 11, **dadurch gekennzeichnet, dass** die Membran auf Höhe von Aufhängungskontakten des Aufhängungssystems des Transportmittels zusätzlich zu oder anstelle von Aufhängungskontakten angeordnet ist.

13. Vorrichtung zur Energierückgewinnung in einem Transportmittel nach einem der Ansprüche 1 bis 6, **dadurch gekennzeichnet, dass** sie eine Membran auf Basis eines elektroaktiven Polymers in der Form von Fasern umfasst, die ein weiches Gewebe bilden.

14. Vorrichtung zur Energierückgewinnung in einem Transportmittel nach Anspruch 11 oder 13, **dadurch gekennzeichnet, dass** die Membran (41) auf Höhe eines Sitzes (40) eines Transportmittels angeordnet ist, um sie Verformungen aussetzen zu können, die durch die Schwingungen einer Person (42) übertragen werden, die auf dem Sitz (40) sitzt.

15. Vorrichtung zur Energierückgewinnung in einem Transportmittel nach einem der Ansprüche 1 bis 6, **dadurch gekennzeichnet, dass** sie eine Membran auf Basis eines elektroaktiven Polymers mit einer Oberfläche umfasst, die in Bezug auf die eines Dachs oder eines Fußbodens oder der Seitenverkleidungen des Transportmittels groß ist, wobei die Membran für eine Positionierung auf einer der Oberflächen geeignet ist.

16. Vorrichtung zur Energierückgewinnung in einem Transportmittel nach einem der Ansprüche 2 bis 15, **dadurch gekennzeichnet, dass** sie eine Membran auf Basis eines elektroaktiven Polymers umfasst, deren mechanische Resonanzfrequenz mit den Frequenzen der elektrischen Anregung der Stromvorrichtung übereinstimmt.

17. Sitz (40) eines Transportmittels, **dadurch gekennzeichnet, dass** er eine Vorrichtung zur Energierückgewinnung nach Anspruch 14 umfasst.

18. Aufhängungsvorrichtung (30) eines Transportmittels, **dadurch gekennzeichnet, dass** sie eine Vorrichtung zur Energierückgewinnung nach Anspruch 10 oder 12 umfasst.

**Claims**

1. Device for recovering energy in a means of transportation comprising a chassis and wheels, **characterized in that** it comprises a generator based on an electroactive polymer (1) taking the form of a dielectric membrane implemented in said means of transportation and placed on the chassis so as to convert, via its deformation, at least some of the mechanical vibrations of the chassis into electrical power, said generator allowing an electrical storage device (5) that supplies a power consumer of said means of transport to be charged.

2. Device for recovering energy in a means of transportation according to Claim 1, **characterized in that** the electroactive polymer (1) is equivalent to a variable capacitor (11), and **in that** the arrangement comprises a primary circuit (12) comprising a generator (2) and a primary switch (14) for charging the variable capacitor (11), and a secondary circuit (13) comprising a secondary switch (16) allowing a signal generated by the variable capacitor (11), due to mechanical deformations of the electroactive polymer (1) causing the capacitance of the capacitor (11) to change, to be transmitted, and **in that** it comprises a means of controlling the switches (14, 16).

3. Device for recovering energy in a means of transportation according to either of Claims 1 and 2, **characterized in that** the electrical storage device (5) consists of a capacitor (15), or of a supercapacitor, or of a rechargeable battery.

4. Device for recovering energy in a means of transportation according to one of the preceding claims, **characterized in that** it comprises a rectifier (7) and a filtering and/or regulating element (8).

5. Device for recovering energy in a means of transportation according to one of the preceding claims, **characterized in that** the electroactive polymer (1) takes the form of a dielectric membrane made from acrylic, silicone, polyvinylidene fluoride (PVDF) or a hybrid complex.

6. Device for recovering energy in a means of transportation according to the preceding claim, **characterized in that** the membrane comprises electrodes comprising deposited or sprayed carbon, carbon fibres, nanotubes or electrically conductive metal oxides (ruthenium oxide, iridium oxide), or electronically conductive polymers (polypyrrole, polythiophene, polyaniline).

7. Device for recovering energy in a means of transportation according to one of the preceding claims, **characterized in that** the arrangement is hydropneumatic, comprises an electroactive-polymer-based membrane (21) inserted between two fluids (22, 23) one fluid (22) of which is compressible and one fluid (23) of which is slightly compressible, pressure increases to which the latter is subjected causing deformation of the membrane (21).

8. Device for recovering energy in a means of transportation according to the preceding claim, **characterized in that** the membrane is associated with the suspension system of the means of transportation, the slightly compressible fluid being the fluid of the hydraulic circuit of the suspension system, or **in that** the membrane is associated with the suspension mounts of the engine.

9. Device for recovering energy in a means of transportation according to one of Claims 1 to 6, **characterized in that** it comprises an electroactive-polymer-based membrane placed linearly along a spring and/or arranged linearly and formed from a network of interpenetrating polymers.

10. Device for recovering energy in a means of transportation according to the preceding claim, **characterized in that** the membrane is wound around the spring of the suspension system (30) of the means of transportation or around a suspension spring of the exhaust line.

11. Device for recovering energy in a means of transportation according to one of Claims 1 to 6, **characterized in that** it comprises an electroactive-polymer-based membrane comprising a planar multilayer structure.

12. Device for recovering energy in a means of transportation according to either of Claims 9 and 11, **characterized in that** the membrane is placed on suspension mounts of the suspension system of the means of transportation, in addition to or in place of the suspension mounts.

13. Device for recovering energy in a means of transportation according to one of Claims 1 to 6, **characterized in that** it comprises an electroactive-polymer-based membrane taking the form of fibres forming a flexible woven.

14. Device for recovering energy in a means of transportation according to either of Claims 11 and 13, **characterized in that** the membrane (41) is placed on a seat (40) of a means of transportation, so as to be able to undergo deformations transmitted by vibrations from a person (42) sat on the seat (40).

15. Device for recovering energy in a means of transportation according to one of Claims 1 to 6, **charac-**terized in that** it comprises an electroactive-polymer-based membrane having a large area relative to those of a roof, or a floor, or the side panels of said means of transportation, said membrane being able to be positioned on one of said areas.

16. Device for recovering energy in a means of transportation according to one of Claims 2 to 15, **characterized in that** it comprises an electroactive-polymer-based membrane the mechanical resonant frequency of which coincides with the electrical excitation frequencies of the electrical device.

17. Seat (40) of a means of transportation, **characterized in that** it comprises an energy recovering device according to Claim 14.

18. Suspension device (30) of a means of transportation, **characterized in that** it comprises an energy recovering device according to either of Claims 10 and 12.

Fig.1

Fig.2

Fig.3

Fig.4

Fig.5

**EP 2 283 528 B1**

## RÉFÉRENCES CITÉES DANS LA DESCRIPTION

**Documents brevets cités dans la description**

- US 20010036723 A1